# EUROPEAN PATENT SPECIFICATION

(11) **EP 3 244 152 B1**
(45) Date of publication and mention of the grant of the patent: **06.11.2019**
(21) Application number: 16169455.9
(22) Date of filing: 12.05.2016
(51) Int. Cl.: F27D 17/00, C21B 7/22

(54) **FURNACE PLANT AND PROCESS FOR TREATING FURNACE GAS**
OFENANLAGE UND VERFAHREN ZUR BEHANDLUNG VON GICHTGAS
INSTALLATION DE FOUR ET PROCÉDÉ DE TRAITEMENT DE GAZ DE FOUR

(43) Date of publication of application: 15.11.2017
(73) Proprietor: Danieli Corus BV, 1951 ME Velsen Noord (NL)
(72) Inventor: Klut, Peter, 1951 ME Velsen Noord (NL); Ewalts, Wouter, 1951 ME Velsen Noord (NL); Hink, Robin Nicolaas, 1951 ME Velsen Noord (NL); Keller, Thomas, 8486 Rikon (CH)
(74) Representative: De Vries & Metman

(56) References cited:
- WO-A1-2013/182748
- WO-A2-2005/018780
- DE-A1- 2 820 728
- DE-A1- 4 301 886
- GB-A- 2 162 293
- US-A- 4 957 512
- US-A1- 2007 277 485

## Description

The present invention pertains to a furnace plant for the production of liquid metal and a process for treating furnace gas produced by such furnaces. Such processes include blast furnace processes, electric arc furnace (EAF) processes, basic oxygen furnace (BOF) processes or direct reduced iron (DRI) processes.

Blast furnace gas leaving the blast furnace contains pollutants, including solid dust particles, which need to be removed. The same problem occurs with gases produced with other liquid steel or iron production processes. Removal of these components is typically done by wet scrubbing by using a venturi scrubber, such as an annular gap scrubber.

A venturi scrubber is a type of wet scrubber using an inlet gas stream to atomize the liquid used to scrub the gas stream. A venturi scrubber typically comprises a converging section, a throat, and a diverging section. The gas stream enters the converging section. In the flow direction gas flow velocity increases as the area decreases. Scrubbing liquid is typically introduced either at the throat or at the entrance to the converging section. The gas stream passes the throat with extremely high flow velocity and atomizes the scrubbing liquid to produce a fog of tiny droplets. Dust is removed from the gas stream in the diverging section where it mixes with the fog. In the diverging section the gas stream slows down again. An annular gap scrubber is a specific type of venturi scrubber having an adjustable annular throat. The throat area is adjusted by moving a plunger up or down in the throat. Gas flows through the annular gap and atomizes liquid that is sprayed onto the plunger or swirled in from the top. An example of such an annular gap scrubber is disclosed in GB 1,362,306.

Gas leaving the venturi scrubber contains gaseous and solid pollutants entrained in the scrubbing water which is carried by the gas flow as small droplets. The droplets are polluted water which needs to be separated from the gas flow and to be collected for further treatment. The droplet content also reduces the suitability of the gas for further use, e.g., in downstream burners, e.g., of an expansion turbine. Vaporization of droplets in an expansion turbine causes droplets carrying solids to produce deposits on the turbine blades that leads to vibrations and unbalance within the turbine. Within burners the droplets in the gas will tend to evaporate which causes heat loss.

Hitherto, the droplet content in gas leaving the scrubber is reduced by using a cyclone mist eliminator comprising a static swirler, particularly in view of the very small droplet size in the atomized mist leaving the venturi scrubber. Moreover, cyclones typically require only little maintenance. In a cyclone droplets are separated by centrifugal force imparted by the swirler. An example of a gas cleaning installation comprising an annular gap scrubber with a mist eliminator is disclosed in "Modern Blast Furnace (BF) And Converter (BOF) Gas Cleaning - A Report of State-of-the-art Technology" by F. Reufer and C. Davidi, available on the website http://seaisi.org. Another example of such a furnace is disclosed by the article "Wet vs Dry Gas Cleaning In The Steel Industry", by H.C. Henschen, Journal of the Air Pollution Control Association, 18:5, p 338-342.

In the prior art gas treatment systems of steel production sites using annular gap scrubbers and cyclone mist eliminators the droplet concentration is typically reduced to about 5000 mg/Nm³. Although this is a substantial reduction of the droplet content there is still a need to reduce the droplet content of the furnace gas even further. Further, DE2820728A1, DE4301886A1 and US4957512 are further examples of the known prior art of such furnace plant.

It is an object of the present invention to achieve a substantial further reduction of the residual dust loaded droplets content in furnace gases.

The object of the invention is achieved with a furnace plant according to claim 1. The mist eliminator comprises a serial arrangement of an upstream and a downstream non-swirling separating device. Such a non-swirling separating device can for example be a mesh-type and/or vane-type separator, excluding swirlers and cyclones. The non-swirling separating device catches droplets in the gas flow and can for instance comprise a mesh and/or vanes shaped to let the droplets impinge onto their surfaces. The caught droplets are separated by impacting and drained by gravity, rather than by centrifugal force. The pressure drop over a venturi scrubber creates a mist with very small droplets. It was found that such atomized and dust-loaded droplets could be separated very efficiently using non-swirling mist eliminators.

In a specific embodiment, the mist eliminator may comprise an inlet diffuser for leveling the gas flow before it passes the non-swirling separating devices. Such a diffuser may for example be a vane-type inlet diffuser, such as a Shell Schoepentoeter™ or Schoepentoeter Plus™, commercially available from Sulzer. Examples of such devices are disclosed in GB 1,119,699, US 8,070,141 and EP 2 243 529 A1. Diffusion and levelling of the gas flow improves the separating efficiency of downstream separators. Additionally, the diffuser itself will also catch and separate droplets and reduce the droplet content.

For completeness sake it is noted that the product bulletin ".demisters R us." by Techim, version of July 27, 2011, discloses a combination of a vane inlet device with a mesh mist eliminator and a vane mist eliminator. The expression "demister", used in this publication, is used in the art as a synonym for the expression "mist eliminator". A similar combination is also disclosed in US 8,657,897. Hitherto it has not been proposed to use such combinations with a venturi scrubber or with a steel or iron production furnace or to use such a combination to remove solid particles from a gas flow.

US 6,083,302 discloses a wet scrubber with a downstream mist eliminator for desulfurization of a gas flow. It does not disclose or suggest using such a combination with a steel or iron production furnace or to remove solid particles from a gas flow.

One of the advantages of using non-swirling separating devices instead of a cyclone, is that a multi-stage separation can be carried out. For instance, the non-swirling separating devices may comprise a serial arrangement of an upstream non-swirling separating device for larger droplets and a downstream non-swirling separating device for smaller droplets. It has been found that this significantly improves the efficiency of droplet removal.

Very good results are obtained with the upstream non-swirling separating device comprising a vane-type mist eliminator, e.g, a mist eliminator comprising at least one series of parallel baffles profiled to define zigzag flow paths, such as a Chevron-type coalescer. Suitable Chevron-type coalescers are for example Mellachevron® coalescers, available from Sulzer. Such separators are particularly effective for separating larger droplets, e.g., droplets having a droplet size of at least about 15 pm. The pressure drop over a Chevron-type coalescer will generally be at least about 2.9 mbar, e.g., at most about 3.6 mbar.

Particularly effective for the removal of smaller droplets are non-swirling separating devices with an inflow section comprising a combination of a wire mesh, such as a grid mesh or knit mesh, and an outflow section comprising a vane-type mist eliminator, in particular a Chevron coalescer, more in particular a Sulzer Mellachevron® coalescer. Examples of commercially available suitable wire mesh separators include KnitMesh™ Wire Mesh Mist Eliminators, Sulzer KnitMesh V-MISTER™, KnitMesh XCOAT™, or the High-Performance KnitMesh™ 9797 Mist Eliminator, all available from Sulzer. In such wire mesh separators small droplets coalesce to form larger droplets which can be separated more efficiently in a subsequent vane-type separator. The pressure drop over such a knit mesh coalescer will generally be at least about 3.6 mbar, e.g., at most about 6 mbar.

Very good results were obtained by using a mist eliminator comprising a vessel housing a serial arrangement of, viewed in flow direction of the treated gas, an upstream vane inlet device, in particular a Shell Schoepentoeter™ or Schoepentoeter Plus™, followed by a first Chevron mist eliminator, in particular a Sulzer Mellachevron™ and subsequently a non-swirling separating device having an inlet section comprising a knit mesh separator, in particular a Sulzer Knitmesh™ mist eliminator and an outlet section comprising a second Chevron-type mist elimination, in particular a Sulzer Mellachevron™. It has been found that such an arrangement enables a reduction of the droplet concentration to a level as low as about 100 mg/Nm³, which is about 50 times lower than the prior art systems using axial-flow cyclone mist eliminators.

The pressure drop over a Shell Schoepentoeter™ will generally be at least about 9.3 mbar, e.g., at most about 11.2 mbar. The total pressure drop of the combination of a Shell Schoepentoeter™ inlet device, a Chevron-type coalescer and a knit mesh will generally be at least about 21.7 mbar, e.g., at most about 27.4 mbar.

Good results are obtained if the gas flow through the non-swirling separating devices is substantially vertical. However, other arrangements, such as a horizontal arrangement, can also be used, if so desired.

At the inlet of the mist eliminator, more particularly at the inlet of the vane inlet device, the pressure may for example typically be about 3 bar or less.

The wet scrubber may for example be an annular gap scrubber. An example of such an annular gap scrubber is disclosed in US 4,375,439.

Optionally, the furnace may comprise one or more dry dust catchers upstream of the wet scrubber. Such a dust catcher may for example comprise a gravity dust catcher and/or a cyclone.

The invention does not only relate to a liquid metal production furnace plant as such but also to a process for treatment of furnace gas discharged from a furnace for the production of liquid metal. As explained above, the gas is first treated in a wet scrubber, preferably a venturi scrubber, more preferably an annular gap scrubber, and subsequently in a mist eliminator comprising at least one non-swirling separating device. Larger droplets can for example be separated in an upstream separating device and subsequently smaller droplets are separated in a downstream separating device. Optionally, the furnace gas is first passed via an inlet diffuser, such as a Shell Schoepentoeter™.

The furnace gas typically comprises at least 15 vol. % carbon monoxide, e.g. at most 80 vol.% carbon monoxide, and at least about 10 vol. % of carbon dioxide, e.g., at most 30 vol.% of carbon dioxide and about 0 - about 20 vol.% of hydrogen. For instance blast furnace gas usually contains about 15 - 35 vol% of carbon monoxide, about 20 - 30 vol% of carbon dioxide and about 3 - 20 vol% of hydrogen. Gas from basic oxygen furnaces typically comprises about 50 - 80 vol% of carbon monoxide and about 10 - 30 vol% of carbon dioxide. The lower heating value (LHV) can be between about 3 to about 12 MJ/Nm3. The LHV of blast furnace gas is for instance typically about 3 - 5 MJ/Nm3, whereas the LHV of gas from basic oxygen furnaces is typically about 9 - 12 MJ/Nm3.

The dust content of the furnace gas may be as high as 15 g/m3 before it enters the wet scrubber. After leaving the mist eliminator, the dust content can be as low as 5 mg/Nm3 or even lower.

Dust born by furnace gas typically has a mean particle size (D50) below 10 pm, measured in accordance with ISO 13320:2009.

In liquid steel or iron production the dust in furnace gas mainly contains a mixture of iron(III)oxide and carbon and less than 5 wt% of zinc.

The plant of the present disclosure is used for the production of liquid metal, in particular liquid steel or iron, but it may also be used for other liquid metals, such as aluminum, nickel, zinc or copper.

The invention is further explained with reference to the accompanying drawings, showing an exemplary embodiment.
Figure 1: shows a furnace plant for liquid steel or iron production;
Figure 2: shows a mist eliminator of the furnace of Figure 1;
Figure 3: shows the Shell Schoepentoeter™ of the mist eliminator of Figure 2;
Figure 4: shows a first non-swirling separating device of the mist eliminator of Figure 2;
Figure 5: shows schematically internals of the device of Figure 4;
Figure 6: shows a second non-swirling separating device of the mist eliminator of Figure 2.

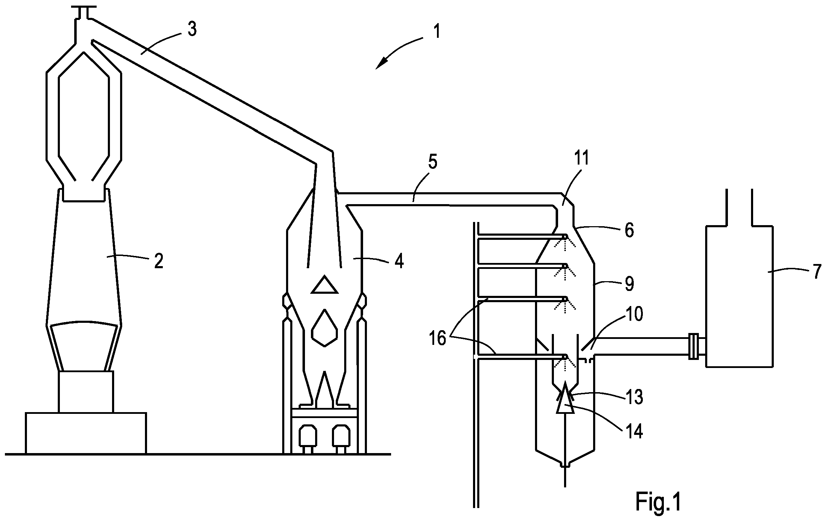

Figure 1 shows a furnace plant 1 for the production of steel or iron. The furnace plant 1 comprises a blast furnace 2 connecting to a discharge line 3 at its top end for the discharge of blast furnace gas. The discharge line 3 opens downwardly into a dry dust catcher 4, where a first portion of the dust is separated by gravity. Alternatively, or additionally, one or more cyclones can be used here. Subsequently, the remaining gas flows through a second discharge line 5 to an annular gap scrubber 6. Downstream of the annular gap scrubber 6, the gas flows into a mist eliminator 7.

The annular gap scrubber 6 comprises a vertical cylindrical vessel 9 with a furnace gas outlet 10 and a furnace gas inlet 11 at its upper end. In the interior of the vessel 9 are annular gap devices 13. The annular gap devices 13 are tapered and comprise a frustoconical plug 14 which can be moved to adjust the width of an annular gap between the plug 14 and the annular gap device 13. Upstream of the annular gap devices 13 is a series of spray nozzles 16 in a pre-scrubber.

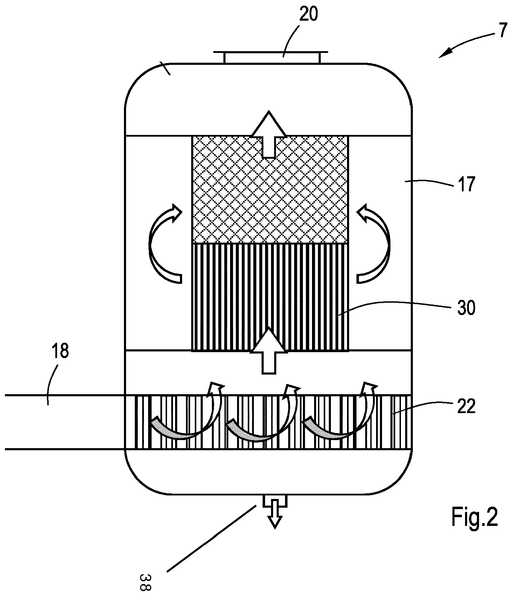

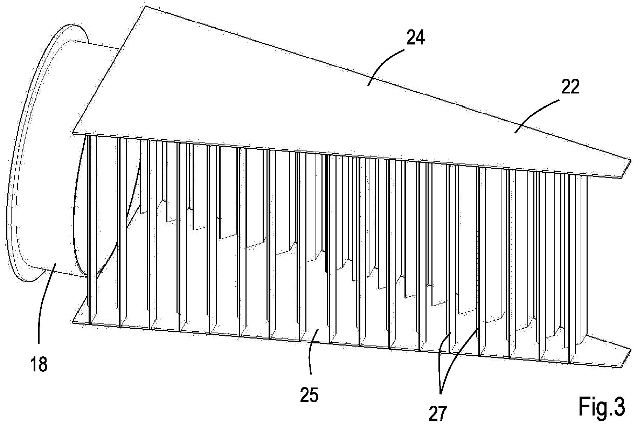

The mist eliminator 7 is shown in more detail in Figure 2 and comprises a vertical cylindrical vessel 17 with a lateral inlet 18 at a lower side of the vessel 17 and an outlet 20 at the top of the vessel 17. The inlet 18 comprises a Shell Schoepentoeter Plus™ inlet diffuser 22, shown in more detail in Figure 3.

In top view the Shell Schoepentoeter Plus™ 22 converges from the inlet side to the opposite side of the vessel 17. The Shell Schoepentoeter Plus™ 22 has closed top and bottom surfaces 24, 25 and two vertical side faces defined by a series of vertical parallel vanes 27 between the top and bottom surfaces 24, 25. The vertical vanes 27 are provided with a row of inclined catching rims 29 (not shown in Figure 3) to reduce the risk of re-entrainment of separated droplets. Such rims 29 are disclosed in detail in US 8,070,141 and EP 2 243 529.

At a distance above and downstream of the Shell Schoepentoeter Plus™ 22 is a first Sulzer Mellachevron™ mist eliminator 30, with a height of about 140 mm in the flow direction. The flow velocity at this point is for instance about 4 - 5 m/s. The pressure drop is typically about 2,5 - 3,5 mbar.

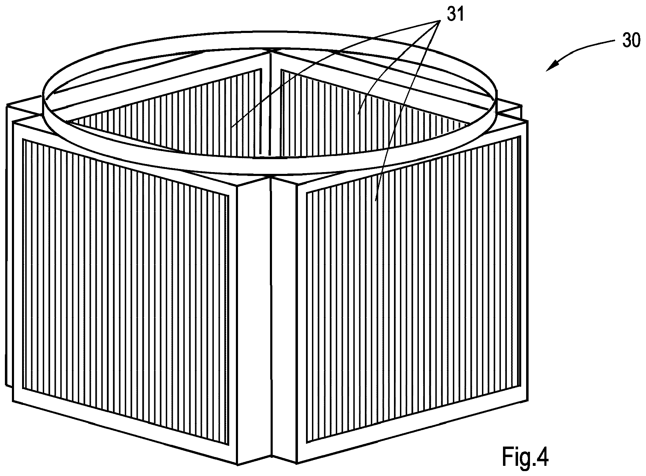

The Sulzer Mellachevron™ mist eliminator 30 is shown in more detail in Figure 4. In the shown embodiment the device comprises four vertical filter elements 31 in a square arrangement. Gas flows into the square via the open bottom side and subsequently it flows through the filter elements 31 (see the arrows in Figure 2). Other arrangements of the filter elements 31 can also be used.

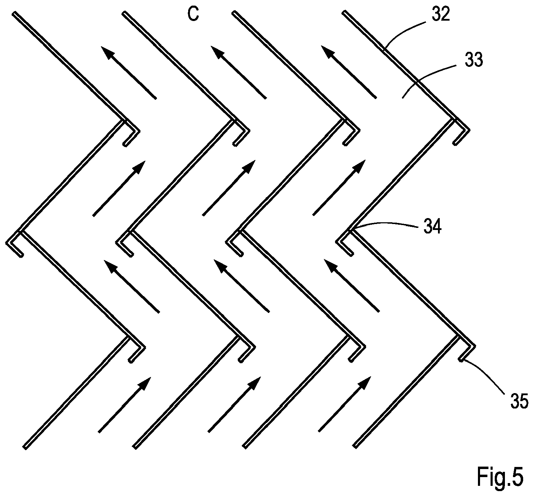

The internals of the filter elements 31 of the Sulzer Mellachevron™ mist eliminator separator 30 (see Figure 5) comprises a series of parallel baffles or partitions 32 bent to define vertical zigzag shaped channels 33, inhibiting a straight vertical gas flow and guiding the gas flow C to follow a meandering flow path, as shown schematically in Figure 2. The corners 34 of the zigzag channels 33 are provided with bent strips 35 with bent top ends pointing in the counterflow direction.

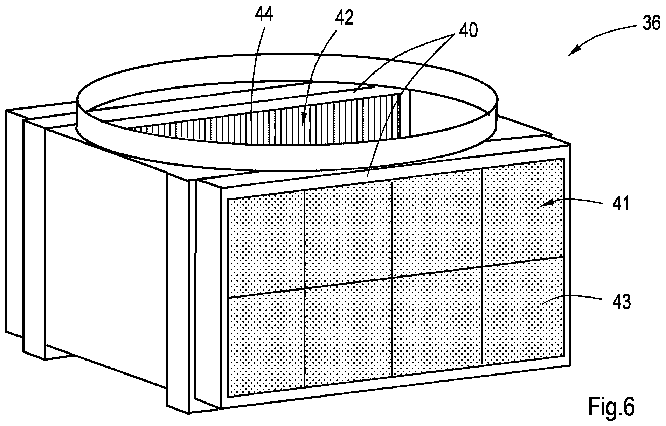

Downstream of the Sulzer Mellachevron™ 30 is a second non-swirling separating device 36, shown in more detail in Figure 6. This non-swirling separating device 36 comprises two opposite symmetrically arranged elements 40, both having an inflow section 41 with a vertically arranged layer of knitted metal wires 43, and an outflow section 42 comprising a second Sulzer Mellachevron™ mist eliminator 44. The elements 40 are arranged vertically with the outflow sections 42 facing each other. Between the layer of knitted metal wires 43 and the Sulzer Mellachevron™ 43 is an air gap. Flow velocity at this point is for instance about 4 - 5 m/s. The thickness of the knit mesh may for example be about 100 mm. The knit mesh density may for example be about 180 - 200 kg/m³, e.g., about 192 kg/m³. The pressure drop is typically about 4,6 - 6 mbar.

In use fresh furnace gas enters the annular gap scrubber 6 via the furnace gas inlet 11. The sprayers 16 spray a co-current spray of water into the gas flow. All of the gas flows through the annular gap devices 13. The water entrains gaseous and solid pollutants. Droplets of water flow upwardly with the gas flow to the outlet 10.

The gas flow carrying the droplets leaves the annular gap scrubber 6 at the outlet 10 and enters the mist eliminator 7 via the Shell Schoepentoeter Plus™ inlet diffuser 22. The vertical vanes 27 of the Shell Schoepentoeter Plus™ level the gas flow. A first part of the droplets in the gas flow impinges on the vanes 27 of the Shell Schoepentoeter Plus™ 22 and is drained by gravity to the bottom 38 of the vessel where it is discharged via a water outlet.

Subsequently, the gas flow arrives at the Sulzer Mellachevron™ 30. The gas flow into the square arrangement and leaves this square via the filter elements 31. In the filter elements 31 the gas flow is deflected a number of times in the zigzag channels 33. Droplets impinge onto the baffles 32 and the bent strips 35 and are drained in a perpendicular manner by gravity. This separates in particular the larger droplets from the gas flow. The separated droplets flow down to the bottom 38 of the vessel and are discharged via the water outlet.

The gas flow leaving the Sulzer Mellachevron™ 30 still contains very small dust-loaded droplets. The gas flow flows upwardly and is forced to pass the knit mesh inflow section 41 of the second non-swirling separating device 36, where the small droplets coalesce to form larger droplets. The gas flow carries the larger droplets to the downstream Sulzer Mellachevron™ 44 at the outflow section 42, where most of the remaining droplets are separated from the gas flow. Downstream of the second non-swirling separating device 36 the gas flow leaves the mist eliminator 7 at the outlet 20. At this stage the discharged gas flow has a droplet concentration of about 100 mg/Nm³, or even less. This is about 50 times lower than the droplet concentration using a conventional cyclone mist eliminator. With a flow of blast furnace gas of 600,000 Nm^{3/h} and an evaporation enthalpy of 2,500 kJ/kg, the net gain of thermal energy would be 2,042 kW. With 355 operational days per year the annual net gain thermal energy would be 17,395 MW/h, corresponding to a net gain electrical power of 6,436 MWh/y with a typical electrical efficiency of 37 %.

## Claims

1. Furnace plant (1) comprising a furnace (2) for production of liquid metal and a discharge line for furnace gas with a wet scrubber (6) and a mist eliminator (7) downstream of the wet scrubber,
wherein the mist eliminator comprises a serial arrangement of an upstream non-swirling separating device (30) for larger droplets and a downstream non-swirling separating device (36) for smaller droplets;
wherein the upstream non-swirling separating device (30) comprises at least one series of parallel baffles profiled to define zigzag flow paths; and
wherein the downstream non-swirling separating device comprises a grid mesh and/or a knit mesh (36) with a second vane-type mist eliminator.

2. Furnace plant according to claim 1, wherein the mist eliminator (7) comprises an inlet diffuser, such as a vane-type inlet device.

3. Furnace plant according to any preceding claim, wherein the wet scrubber comprises a venturi scrubber, e.g., an annular gap scrubber (6).

4. Process for treatment of furnace gas discharged from a furnace (2) for the production of metal, wherein the gas is first treated in a wet scrubber (6) and subsequently in a mist eliminator comprising a serial arrangement of at least an upstream non-swirling separating device (30) and a downstream non-swirling separating device (36), wherein the upstream separating device comprises a first vane-type mist eliminator, and wherein the downstream non-swirling separating device comprises a grid mesh and/or knit mesh (36) with a second vane-type mist eliminator.

5. Process according to claim 4, wherein the wet scrubber is an annular gap scrubber (6).

6. Process according to any one of claims 4 or 5, wherein the wet scrubber is a venturi scrubber and the furnace gas flow is levelled downstream of the venturi scrubber and upstream of the non-swirling separating devices, e.g., by means of an inlet diffuser (22).

7. Process according to any one of the preceding claims 4 - 6, wherein the liquid metal is steel, iron, aluminum, nickel, zinc or copper.

## Patentansprüche

1. Ofenanlage (1) mit einem Ofen (2) zum Herstellen von Flüssigmetall und einer Ausgabeleitung für Ofengas mit einem Nasswäscher (6) und einem stromabwärts vom Nasswäscher angeordneten Tropfenabscheider (7),
wobei der Tropfenabscheider eine serielle Anordnung aus einer stromaufwärtsseitigen nicht verwirbelnden Abscheidevorrichtung (30) für größere Tröpfchen und einer stromabwärtsseitigen nicht verwirbelnden Abscheidevorrichtung (36) für kleinere Tröpfchen aufweist,
wobei die stromaufwärtsseitige, nicht verwirbelnde Abscheidevorrichtung (30) mindestens eine Reihe paralleler Leitbleche aufweist, die derart profiliert sind, dass sie zickzackförmige Strömungswege definieren, und
wobei die stromabwärtsseitige, nicht verwirbelnde Abscheidevorrichtung ein Gitternetz und/oder ein Gestrick (36) mit einem zweiten Tropfenabscheider des Lamellentyps aufweist.

2. Ofenanlage nach Anspruch 1, wobei der Tropfenabscheider (7) einen Einlassdiffusor, wie beispielsweise eine Einlassvorrichtung des Lamellentyps, aufweist.

3. Ofenanlage nach einem der vorangehenden Ansprüche, wobei der Nasswäscher einen Venturiwäscher, wie beispielsweise einen Ringspaltwäscher (6), aufweist.

4. Verfahren zum Behandeln von Ofengas, das aus einem Ofen (2) zum Herstellen von Metall ausgegeben wird, wobei das Gas zunächst in einem Nasswäscher (6) und anschließend in einem Tropfenabscheider mit einer seriellen Anordnung aus mindestens einer stromaufwärtsseitigen nicht verwirbelnden Abscheidevorrichtung (30) und einer stromabwärtsseitigen nicht verwirbelnden Abscheidevorrichtung (36) behandelt wird, wobei die stromaufwärtsseitige Abscheidevorrichtung einen ersten Tropfenabscheider des Lamellentyps aufweist, und wobei die stromabwärtsseitige nicht verwirbelnde Abscheidevorrichtung ein Gitternetz und/oder ein Gestrick (36) mit einem zweiten Tropfenabscheider des Lamellentyps aufweist.

5. Verfahren nach Anspruch 4, wobei der Nasswäscher ein Ringspaltwäscher (6) ist.

6. Verfahren nach Anspruch 4 oder 5, wobei der Nasswäscher ein Venturiwäscher ist und der Ofengasstrom stromabwärts vom Venturiwäscher und stromaufwärts von den nicht verwirbelnden Abscheidevorrichtungen z.B. mittels eines Einlassdiffusors (22) ausgeglichen wird.

7. Verfahren nach einem der Ansprüche 4 bis 6, wobei das Flüssigmetall Stahl, Eisen, Aluminium, Nickel, Zink oder Kupfer ist.

## Revendications

1. Installation de four (1) comprenant un four (2) pour une production de métal liquide et une ligne d'évacuation de gaz de four avec un épurateur par voie humide (6) et un éliminateur de brouillard (7) en aval de l'épurateur par voie humide,
dans laquelle l'éliminateur de brouillard comprend un agencement série d'un dispositif de séparation non tourbillonnant amont (30) pour de plus grandes gouttelettes et un dispositif de séparation non tourbillonnant aval (36) pour de plus petites goutellettes ;
dans laquelle le dispositif de séparation non tourbillonnant amont (30) comprend au moins une série de chicanes parallèles profilées pour définir des chemins d'écoulement en zigzag ; et
dans laquelle le dispositif de séparation non tourbillonnant aval comprend une maille en grille et/ou une maille tricot (36) avec un second éliminateur de brouillard de type aubes.

2. Installation de four selon la revendication 1, dans laquelle l'éliminateur de brouillard (7) comprend un diffuseur d'entrée, tel qu'un dispositif d'entrée de type à aubes.

3. Installation de four selon une quelconque revendication précédente, dans laquelle l'épurateur par voie humide comprend un épurateur de type venturi, par exemple un épurateur à écartement annulaire (6).

4. Procédé de traitement de gaz de four évacué d'un four (2) pour la production de métal, dans lequel le gaz est tout d'abord traité dans un épurateur par voie humide (6) et ultérieurement dans un éliminateur de brouillard comprenant un agencement série d'au moins un dispositif de séparation non tourbillonnant amont (30) et un dispositif de séparation non tourbillonnant aval (36) dans lequel le dispositif de génération amont comprend un premier éliminateur de brouillard de type à aubes, et dans lequel le dispositif de séparation non tourbillonnant aval comprend une maille en grille et/ou une maille tricot (36) avec un second éliminateur de brouillard de type à aubes.

5. Procédé selon la revendication 4, dans lequel l'épurateur par voie humide est un épurateur à écartement annulaire (6).

6. Procédé selon l'une quelconque des revendications 4 ou 5, dans lequel l'épurateur par voie humide est un épurateur de type venturi et l'écoulement de gaz de four est nivelé en aval de l'épurateur de type venturi et en amont des dispositifs de séparation non tourbillonnants par exemple, au moyen d'un diffuseur d'entrée (22).

7. Procédé selon l'une quelconque des revendications 4 à 6 précédentes, dans lequel le métal liquide est de l'acier, du fer, de l'aluminium, du nickel, du zinc ou du cuivre.
